# EUROPEAN PATENT SPECIFICATION

(11) **EP 3 595 054 B1**
(45) Date of publication and mention of the grant of the patent: **06.01.2021**
(21) Application number: 18790128.5
(22) Date of filing: 26.04.2018
(51) Int. Cl.: H01M 4/14, H01M 4/62, H01M 4/68, H01M 10/06

(54) **LEAD ACID BATTERY**
BLEIBATTERIE
BATTERIE AU PLOMB-ACIDE

(30) Priority: 28.04.2017 JP 2017090849
(43) Date of publication of application: 15.01.2020
(73) Proprietor: GS Yuasa International Ltd., Kyoto-shi, Kyoto 601-8520 (JP)
(72) Inventor: KOJIMA, Rikio, Kyoto-shi Kyoto 601-8520 (JP)
(74) Representative: Isarpatent
(86) International application number: PCT/JP2018/016911
(87) International publication number: WO 2018/199207

(56) References cited:
- WO-A1-2012/086008
- WO-A1-2012/157311
- JP-A- 2016 154 131
- JP-A- 2016 177 909
- JP-A- 2017 054 629

## Description

### TECHNICAL FIELD

The present invention relates to a lead-acid battery.

### BACKGROUND ART

A lead-acid battery is used in various applications in addition to in-vehicle and industrial applications. The lead-acid battery includes a negative electrode plate, a positive electrode plate, and an electrolyte solution. The negative electrode plate includes a current collector (such as a grid-shaped current collector) and a negative electrode material. Lead or a lead alloy is used for the current collector. The negative electrode material contains a negative active material and a carbon material and the like.

Patent Document 1 proposes use of a negative electrode current collector made of a Pb-Ca-Sn-based alloy in a valve regulated lead-acid battery. Patent Document 2 proposes use of a negative electrode grid made of a Pb-Ca-Sn alloy substantially free of Sb in a lead-acid battery. Patent Document 2 describes that acetylene black and expanded graphite are added to a negative active material. Patent Document 3 describes that carbon black and graphite are added to a negative active material.

### PRIOR ART DOCUMENTS

### PATENT DOCUMENTS

Patent Document 1: JP-A-2016-177909
Patent Document 2: JP-A-2010-277941
Patent Document 3: JP-A-2016-154131

### SUMMARY OF THE INVENTION

### PROBLEMS TO BE SOLVED BY THE INVENTION

In a lead-acid battery, a lug portion collecting a current from a negative electrode plate and connected to an external terminal of the lead-acid battery is formed in an end part of a negative electrode current collector. In a lead-acid battery for idling stop, charge-discharge may cause a corroded lug portion of a negative electrode to cause the lug portion to be broken. This is considered to be because lead contained in the lug portion of the negative electrode is oxidized during discharge in charge-discharge cycles, but the oxidized lead is not completely reduced to lead during charge, and this repetition causes corrosion to gradually proceed in the lug portion. Even flooded-type and valve regulated lead-acid batteries may be corroded when the potential of a lug portion falls into a specific potential.

### MEANS FOR SOLVING THE PROBLEMS

One aspect of the present invention is a lead-acid battery including:
a negative electrode plate; and
a positive electrode plate,
wherein:
   the negative electrode plate includes a negative electrode current collector and a negative electrode material containing a carbon material;
   the carbon material contains a first carbon material having a particle size of 32 µm or more, and a second carbon material having a particle size of less than 32 µm;
   a ratio of powder resistance R2 of the second carbon material to powder resistance R1 of the first carbon material: R2/R1 is 15 or more and 155 or less; and
   the negative electrode current collector is composed of a Pb alloy containing more than 0.06 mass% and 0.15 mass% or less of Ca and 0.10 mass% or more and 0.80 mass% or less of Sn.

### ADVANTAGES OF THE INVENTION

According to the above aspect of the present invention, the corrosion of the lug portion of the negative electrode plate can be suppressed in the lead-acid battery.

### BRIEF DESCRIPTION OF THE DRAWINGS

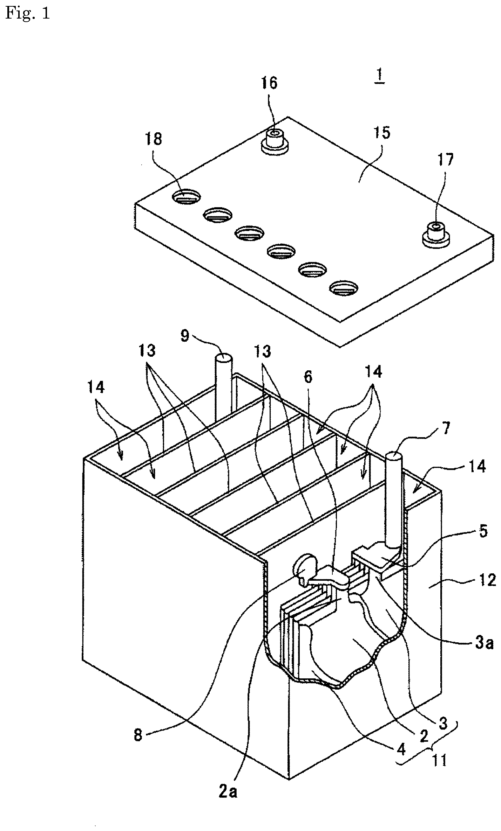

Fig. 1 is an exploded perspective view with a part cut away, showing an external appearance and an internal structure of a lead-acid battery according to an embodiment of the present invention.

### MODE FOR CARRYING OUT THE INVENTION

A lead-acid battery according to one aspect of the present invention includes a negative electrode plate and a positive electrode plate. The negative electrode plate includes a negative electrode current collector and a negative electrode material containing a carbon material. The carbon material contains a first carbon material having a particle size of 32 µm or more and a second carbon material having a particle size of less than 32 µm. A ratio of powder resistance R2 of the second carbon material to powder resistance R1 of the first carbon material: R2/R1 is 15 or more and 155 or less. The negative electrode current collector is composed of a Pb alloy containing more than 0.06 mass% and 0.15 mass% or less of Ca and 0.10 mass% or more and 0.80 mass% or less of Sn.

It is known that, when a lug portion of the negative electrode plate is repeatedly exposed to a specific potential near an equilibrium potential between Pb and PbSO₄ (specifically, a potential of about +40 mV during discharge and a potential of about -80 mV during charge), the corrosion of the lug portion proceeds. Conventionally, the change of the alloy composition of the negative electrode current collector is considered to suppress the corrosion of the lug portion.

The present inventors noticed that the potential of the lug portion of the negative electrode plate is affected by the composition of the negative electrode material. For example, when the carbon material contained in the negative electrode material is carbon black, the potential of the lug portion of the negative electrode plate easily fall into the range of the specific potential in which the lug portion is easily corroded. It was found that, even if the alloy composition of the negative electrode current collector is changed when the carbon black is used as the carbon material, the corrosion of the lug portion cannot be suppressed so much. As a result of trials and errors, the present inventors found that two types of carbon materials (first carbon material and second carbon material) having different particle sizes are used as the negative electrode carbon material, and the powder resistance ratio R2/R1 of the carbon materials is adjusted, whereby a corrosion suppressing effect is easily obtained by controlling the alloy composition of the negative electrode current collector, and the corrosion of the lug portion of the negative electrode plate is remarkably suppressed.

In the above aspect of the present invention, as the negative electrode material, the first and second carbon materials having a powder resistance ratio R2/R1 of 15 or more and 155 or less are used, and the negative electrode current collector is composed of a Pb alloy containing more than 0.06 mass% and 0.15 mass% or less of Ca and 0.10 mass% or more and 0.80 mass% or less of Sn. The configuration significantly suppresses the corrosion of the lug portion of the negative electrode plate. The details of the mechanism in which the corrosion of the lug portion is suppressed are unknown, but the powder resistance ratio R2/R1 of the carbon material in the negative electrode material is set within the above range, whereby the polarization characteristics of the negative electrode plate change. Therefore, it is presumed that the corrosion of the lug portion of the negative electrode is reduced because the potential of the lug portion during charge-discharge falls outside a specific potential at which corrosion proceeds. When the powder resistance ratio R2/R1 is within the above range, the accumulation of lead sulfate can be suppressed, and high low temperature high rate discharge performance can also be obtained. This is considered to be because a conductive network is easily formed in the negative electrode material, and the corrosion of the lug portion is suppressed, whereby a state where a conductive path in the lug portion is secured is maintained, and the conductivity of the entire negative electrode plate is improved. The reason why the accumulation of lead sulfate is reduced is considered to be that the conductivity of the entire negative electrode plate is improved to cause the reductive reaction of lead sulfate to easily proceed.

Carbon materials having various powder resistances have been generally known. It has been known that the powder resistance of a powder material varies depending on the shape, size, internal structure, and/or crystallinity of the particle, and the like. In the conventional technical common sense, it is not considered that the powder resistance of the carbon material affects the corrosion of the lug portion of the negative electrode plate.

The ratio of a specific surface area S2 of the second carbon material to a specific surface area S1 of the first carbon material: S2/S1 is preferably 20 or more and 240 or less. When the specific surface area ratio S2/S1 is within such a range, the high low temperature high rate discharge performance can be secured. The negative electrode material usually contains an organic expander, but when the specific surface area ratio S2/S1 is within the above range, the adsorption of the organic expander to the carbon material is suppressed, and a shrink proofing effect is exhibited. Therefore, it is considered that the low temperature high rate discharge performance is improved.

The average aspect ratio of the first carbon material is 1.5 or more and 30 or less. In this case, since the conductive network is easily formed in the negative electrode material, the high low temperature high rate discharge performance is obtained. The formation of a number of conductive networks causes the reductive reaction of lead sulfate to easily proceed, whereby the accumulation of lead sulfate can also be reduced.

The content of the first carbon material in the negative electrode material is 0.03 mass% or more and 3.0 mass% or less, and more preferably 2.5 mass% or less. The content of the second carbon material is 0.03 mass% or more and 1.5 mass% or less, and preferably 0.05 mass% or more. In this case, the conductive network is easily formed in the negative electrode material while the corrosion of the lug portion is suppressed, whereby the low temperature high rate discharge performance is improved, and the accumulation of lead sulfate can be reduced.

Hereinafter, a lead-acid battery according to an embodiment of the present invention will be described for every main component requirement, but the present invention is not limited to the following embodiment.

### (Negative Electrode Plate)

A negative electrode plate of the lead-acid battery includes a negative electrode material and a negative electrode current collector. The negative electrode material is obtained by removing the negative electrode current collector from the negative electrode plate.

A member such as a mat or pasting paper may be attached to the negative electrode plate. When the negative electrode plate includes such a member (attached member), the negative electrode material is obtained by removing the negative electrode current collector and the attached member. However, the thickness of the electrode plate includes the thickness of the mat. When the mat is attached to the separator, the thickness of the mat is included in the thickness of the separator.

The negative electrode material contains a negative active material (lead or lead sulfate) that develops a capacity in an oxidation-reduction reaction. The negative active material in a charged state is spongy metal lead, but an unformed negative electrode plate is usually produced using a lead powder. The negative electrode material contains a carbon material. The negative electrode material may further contain an organic expander and barium sulfate and the like, and may contain other additives as necessary.

### (Carbon Material)

The carbon material contains a first carbon material having a particle size of 32 µm or more and a second carbon material having a particle size of less than 32 µm. The first carbon material and the second carbon material are separated and distinguished in a procedure described later.

Examples of each carbon material include carbon black, graphite, hard carbon, and soft carbon. Examples of the carbon black include acetylene black, ketjen black, furnace black, and lamp black. The graphite may be a carbon material including a graphite type crystal structure, and may be any of artificial graphite and natural graphite.

In the first carbon material, a carbon material having an intensity ratio I_{D}/I_{G} of 0 or more and 0.9 or less is referred to as graphite. The intensity ratio I_{D}/I_{G} is an intensity ratio of a peak (D band) appearing in a range of 1300 cm⁻¹ or more and 1350 cm⁻¹ or less to a peak (G band) appearing in a range of 1550 cm⁻¹ or more and 1600 cm⁻¹ or less in a Raman spectrum.

The type, specific surface area, and/or aspect ratio and the like of the carbon material used for preparing the negative electrode material may be selected or adjusted such that the ratio of the powder resistance R2 of the second carbon material to the powder resistance R1 of the first carbon material: R2/R1 is 15 or more and 155 or less. In addition to these elements, the particle size of the carbon material to be further used may be adjusted. By selecting or adjusting these elements, the powder resistance of each of the first carbon material and the second carbon material can be adjusted, as a result of which the powder resistance ratio R2/R1 can be adjusted.

As the first carbon material, for example, at least one selected from the group consisting of graphite, hard carbon, and soft carbon is preferable. In particular, the first carbon material preferably contains at least graphite. The second carbon material preferably contains at least carbon black. When these carbon materials are used, the powder resistance ratio R2/R1 is easily adjusted.

The powder resistance ratio R2/R1 may be 15 or more and 155 or less, and may be 15 or more and 152 or less. In the lead-acid battery according to one aspect of the present invention, the powder resistance ratio of the first carbon material and the second carbon material in the negative electrode material is within such a range, whereby the corrosion of the lug portion of the negative electrode plate can be suppressed. This is considered to be because the powder resistance ratio R2/R1 is set within the above range, whereby the polarization characteristics of the negative electrode plate change, to cause the potential of the lug portion during charge-discharge to fall outside a potential range where corrosion proceeds. When the powder resistance ratio is within the above range, the accumulation of lead sulfate can be suppressed, and the high low temperature high rate discharge performance can also be obtained. This is considered to be because the powder resistance ratio R2/R1 is within the above range, whereby a conductive network is easily formed in the negative electrode material. In contrast, a case where the negative electrode current collector is composed of a Pb alloy having the above composition is also unlike the present invention, and when the powder resistance ratio R2/R1 is less than 15, or more than 155, an effect of suppressing the corrosion of the lug portion of the negative electrode plate is hardly obtained. When the powder resistance ratio R2/R1 is less than 15, or more than 155, an effect of reducing the accumulation amount of lead sulfate and/or an effect of improving the low temperature high rate discharge performance are/is also hardly obtained.

In the lead-acid battery according to one aspect of the present invention, the ratio of the specific surface area S2 of the second carbon material to the specific surface area S1 of the first carbon material: S2/S1 is, for example, 10 or more and 500 or less, and preferably 20 or more. The ratio is preferably 400 or less, and more preferably 240 or less. These upper and lower limits can be optionally combined. The specific surface area ratio S2/S1 is preferably 20 or more and 240 or less from the viewpoint of easily exhibiting the shrink proofing effect of the organic expander and obtaining the high low temperature high rate discharge performance. Even when the specific surface area ratio S2/S1 is within such a range, the high corrosion resistance of the lug portion of the negative electrode plate is secured.

When the average aspect ratio of the first carbon material is 1.5 or more and 30 or less, a conductive network is easily formed in the negative electrode material, and lead sulfate is easily reduced, whereby the low temperature high rate discharge performance can be improved, and the accumulation of lead sulfate can be reduced. Also from the viewpoint of high dispersibility of the first carbon material in the negative electrode material, the average aspect ratio of the first carbon material is 1.5 or more and 30 or less.

The total content of the first carbon material and the second carbon material in the negative electrode material is, for example, 0.1 mass% or more and 3.5 mass% or less, preferably 0.3 mass% or more, and more preferably 0.5 mass% or more. The total content is preferably 2.5 mass% or less, and more preferably 2 mass% or less. These upper and lower limits can be optionally combined. When the total content of the first carbon material and the second carbon material is within such a range, a conductive network is easily formed, whereby an effect of improving the low-temperature rate performance can be further improved.

The content of the first carbon material in the negative electrode material is, for example, 0.03 mass% or more and 3.0 mass% or less, preferably 2.5 mass% or less, and more preferably 2.0 mass% or less. The content is preferably 0.05 mass% or more, and more preferably 0.1 mass% or more. These upper and lower limits can be optionally combined. When the content of the first carbon material is within such a range, a conductive network is easily formed in the negative electrode material, whereby the low temperature high rate discharge performance can be improved, and the accumulation of lead sulfate can be reduced.

The content of the second carbon material in the negative electrode material is, for example, 0.03 mass% or more and 1.5 mass% or less, preferably 0.05 mass% or more, and more preferably 0.1 mass% or more. The content is preferably 1.0 mass% or less, and more preferably 0.7 mass% or less. These upper and lower limits can be optionally combined. When the content of the second carbon material is 0.05 mass% or more, a conductive network is easily formed in the negative electrode material. When the content of the second carbon material is 1.5 mass% or less, an effect of controlling the alloy composition of the negative electrode current collector is easily obtained, and an effect of suppressing the corrosion of the lug portion can be further improved.

A method for determining or analyzing the physical properties of the carbon material will be described below.

### (A) Analysis of Carbon Material

### (A-1) Separation of Carbon Material

A fully charged lead-acid battery that has been formed is disassembled to take out a negative electrode plate, and sulfuric acid is removed by washing with water, followed by vacuum drying (drying under a pressure lower than atmospheric pressure). Next, a negative electrode material is collected from the dried negative electrode plate, and pulverized. 30 mL of a nitric acid aqueous solution having a concentration of 60 mass% is added to 5 g of the pulverized sample, followed by heating at 70°C. To this mixture, 10 g of disodium ethylenediaminetetraacetate, 30 mL of aqueous ammonia having a concentration of 28 mass%, and 100 mL of water are further added, followed by continuously heating to dissolve soluble components. The sample thus pretreated is collected by filtration. The collected sample is passed through a sieve having an opening of 500 µm, to remove components having a large size such as a reinforcing material, and the components that have passed through the sieve are collected as a carbon material.

When the collected carbon material is wet-sieved using a sieve with an opening of 32 µm, a carbon material remaining on the sieve without passing through the opening of the sieve is a first carbon material, and a carbon material passing through the opening of the sieve is a second carbon material. That is, the particle size of each carbon material is based on the size of the opening of the sieve. For wet-sieving, JIS Z8815: 1994 can be referred to.

Specifically, the carbon material is placed on a sieve having an opening of 32 µm, and the carbon material is sieved by gently shaking the sieve for 5 minutes while ion-exchange water is sprinkled. The first carbon material remaining on the sieve is recovered from the sieve by pouring ion-exchanged water, and separated from the ion-exchanged water by filtration. The second carbon material that has passed through the sieve is recovered by filtration using a membrane filter (opening: 0.1 µm) made of nitrocellulose. The recovered first and second carbon materials are each dried at a temperature of 110°C for 2 hours. As the sieve having an opening of 32 µm, a sieve including a sieve mesh having a nominal opening of 32 µm as defined in JIS Z 8801-1: 2006 is used.

The content of each carbon material in the negative electrode material is determined by measuring the mass of each carbon material separated in the above procedure, and calculating the ratio (mass%) of the mass in 5 g of the pulverized sample.

In the present specification, in the case of a flooded-type battery, a fully charged state of the lead-acid battery is a state where constant current charge is performed until reaching 2.5 V/cell at a current of 0.2 CA in a water bath at 25°C, and constant current charge is then performed at 0.2 CA for 2 hours. In the case of a valve regulated battery, a fully charged state is a state where constant current constant voltage charge of 2.23 V/cell is performed at a constant current of 0.2 CA in an air tank at 25°C, and charge is finished when a charge current during the constant voltage charge is 1 mCA or less.

In the present specification, 1 CA is a current value (A) having the same value as the nominal capacity (Ah) of the battery. For example, in the case of a battery having a nominal capacity of 30 Ah, 1 CA is 30 A, and 1 mCA is 30 mA.

### (A-2) Powder Resistance of Carbon Material

The powder resistance R1 of the first carbon material and the powder resistance R2 of the second carbon material are values measured for each of the first carbon material and the second carbon material separated in the procedure (A-1) by a four-point probe method using a low resistivity meter (Loresta-GX MCP-T700, manufactured by Mitsubishi Chemical Analytech Co., Ltd.) with reference to JIS K 7194: 1994 under a pressure of 3.18 MPa in a state where 0.5 g of a sample is placed in a powder resistivity measurement system (MCP-PD51, manufactured by Mitsubishi Chemical Analytech Co., Ltd.).

### (A-3) Specific Surface Area of Carbon Material

The specific surface area S1 of the first carbon material and the specific surface area S2 of the second carbon material are respectively the BET specific surface areas of the first carbon material and the second carbon material. The BET specific surface area is determined by a gas adsorption method using the BET equation using each of the first carbon material and the second carbon material separated in the procedure (A-1). Each carbon material is pretreated by heating in a nitrogen flow at a temperature of 150°C for 1 hour. Using the pretreated carbon material, the BET specific surface area of each carbon material is determined under the following conditions using the following device.
Measuring device: TriStar3000 manufactured by Micromeritics Instrument Corporation
Adsorption gas: Nitrogen gas having a purity of 99.99% or more
Adsorption temperature: Liquid nitrogen boiling point temperature (77 K)
Method for calculating BET specific surface area: with reference to JIS Z 8830: 2013 7.2

### (A-4) Average Aspect Ratio of First Carbon Material

The first carbon material separated in the procedure (A-1) is observed with an optical microscope or an electron microscope. 10 or more optional particles are selected, and a magnified photograph thereof is taken. Next, the photograph of each particle is subjected to image processing to determine a maximum diameter d1 of the particle and a maximum diameter d2 in a direction orthogonal to the maximum diameter d1, and d1 is divided by d2 to determine an aspect ratio of each particle. An average aspect ratio is calculated by averaging the obtained aspect ratios.

### (Organic Expander)

The organic expander contained in the negative electrode material is an organic polymer containing a sulfur element. The organic expander generally contains one or more, preferably a plurality of aromatic rings in its molecule, and contains a sulfur element as a sulfur-containing group. In the sulfur-containing group, a sulfonic acid group or a sulfonyl group which is a stable form is preferable. The sulfonic acid group may exist in an acid form, or may exist in a salt form such as an Na salt.

As the organic expander, for example, lignins may be used, or a synthetic organic expander may be used. As the synthetic organic expander, a condensate of an aromatic compound having a sulfur-containing group with formaldehyde may be used. Examples of the lignins include lignin derivatives such as lignins, lignin sulfonic acids, or salts thereof (alkali metal salts such as sodium salts, and the like). The organic expander may be used alone, or two or more organic expanders may be used in combination. For example, lignins and a condensate of an aromatic compound having a sulfur-containing group with formaldehyde may be used in combination. As the aromatic compound, bisphenols, biphenyls, and naphthalenes and the like are preferably used.

The content of the organic expander contained in the negative electrode material is, for example, 0.01 mass% or more and 1.0 mass% or less, preferably 0.02 mass% or more, and preferably 0.8 mass% or less. These upper and lower limits can be optionally combined.

Hereinafter, a method for quantifying the organic expander contained in the negative electrode material will be described. Prior to quantitative analysis, the lead-acid battery that has been formed is fully charged, and then disassembled to obtain a negative electrode plate to be analyzed. The obtained negative electrode plate is washed with water and dried to remove an electrolyte solution in the negative electrode plate. Next, the negative electrode material is separated from the negative electrode plate, to obtain an unpulverized initial sample.

### [Organic Expander]

The unpulverized initial sample is pulverized, and the pulverized initial sample is immersed in a 1 mol/L NaOH aqueous solution to extract an organic expander. Insoluble components are removed by filtration from the aqueous NaOH solution containing the extracted organic expander. The obtained filtrate (hereinafter also referred to as "filtrate to be analyzed") is desalted, concentrated, and dried to obtain an organic expander powder (hereinafter also referred to as "powder to be analyzed"). The desalting may be performed by placing the filtrate in a dialysis tube and immersing it in distilled water.

Information is obtained from infrared spectrum of the powder to be analyzed, UV-visible absorption spectrum of a solution obtained by dissolving the powder to be analyzed in distilled water and the like, NMR spectrum of a solution obtained by dissolving the powder to be analyzed in a solvent such as heavy water, and pyrolysis GC-MS that can obtain information on individual compounds constituting a substance, and the like, to specify the organic expander.

The UV-visible absorption spectrum of the filtrate to be analyzed is measured. The content of the organic expander in the negative electrode material is quantified using the spectral intensity and a calibration curve prepared in advance. When the structural formula of the organic expander to be analyzed cannot be strictly specified, and the calibration curve of the same organic expander cannot be used, a calibration curve is prepared using an available organic expander showing UV-visible absorption spectrum, infrared spectroscopic spectrum, and NMR spectrum and the like similar to those of the organic expander to be analyzed.

### (Negative Electrode Current Collector)

A lead alloy constituting the negative electrode current collector contains Ca and Sn, and may be a Pb-Ca-Sn-based ternary alloy. The lead alloy may be a quaternary or quinary Pb alloy containing Ca, Sn, and an additive element.

The content of Ca in the Pb alloy is more than 0.06 mass%, preferably 0.065 mass% or more, and more preferably 0.070 mass% or more. The content of Ca in the Pb alloy is 0.15 mass% or less, and preferably 0.12 mass% or less. These lower limit values and upper limit values can be optionally combined. The content of Ca in the Pb alloy is, for example, more than 0.06 mass% and 0.12 mass% or less, 0.065 mass% or more and 0.15 mass% or less, 0.065 mass% or more and 0.12 mass% or less, 0.070 mass% or more and 0.15 mass% or less, or 0.070 mass% or more and 0.12 mass% or less. When the content of Ca is within such a range, the corrosion of the lug portion of the negative electrode plate can be suppressed. This is considered to be because the metal structure tends to be fine, which causes corrosion to slowly proceed. When the content of Ca is within such a range, the corrosion of the lug portion is suppressed, and a state where a conductive path is secured can be maintained. The maintenance of the high conductivity of the lug portion and the formation of the conductive network in the negative electrode material due to the powder resistance ratio R2/R1 provide increased conductivity of the entire negative electrode plate, whereby an effect of suppressing the accumulation amount of lead sulfate and an effect of improving the low temperature high rate discharge performance are also easily obtained. When the content of Ca is more than 0.15 mass%, the grid intensity decreases.

The content of Sn in the Pb alloy may be 0.10 mass% or more and 0.80 mass% or less, and is preferably 0.10 mass% or more and 0.75 mass% or less. When the content of Sn is within such a range, the corrosion of the lug portion of the negative electrode plate can be suppressed for the same reason as that of the content of Ca. The maintenance of the high conductivity of the lug portion and the formation of the conductive network in the negative electrode material due to the powder resistance ratio R2/R1 provide increased conductivity of the entire negative electrode plate, whereby an effect of reducing the accumulation amount of lead sulfate and an effect of improving the low temperature high rate discharge performance are easily obtained. When the content of Sn is less than 0.10 mass%, breakage is apt to occur. In particular, if the content of Sn is less than 0.10 mass% when the negative electrode current collector is formed by casting, hot metal flow is reduced, so that breakage is apt to occur.

Examples of the additive element of the Pb alloy include at least one selected from the group consisting of Ba, Ag, Al, Bi, As, Se, and Cu and the like.

The content of the additive element in the Pb alloy is, for example, 0.01 mass% or less, and preferably 0.001 mass% or less.

The Pb alloy may inevitably contain impurities in addition to Pb, Ca, Sn, and the above additive elements. The content of the impurities in the Pb alloy is preferably 0.001 mass% or less.

The content of an element contained in the Pb alloy constituting the negative electrode current collector is determined by conducting ICP emission spectroscopic analysis using an inductively coupled plasma (ICP) emission spectrometer (ICPS-8000, manufactured by Shimadzu Corporation) for a solution in which a negative electrode current collector is dissolved in nitric acid. When the content of the element in the negative electrode current collector of the negative electrode plate taken out from the produced lead-acid battery is analyzed, the negative electrode plate is washed with water, dried, and subjected to vibration to drop the negative electrode material from the negative electrode current collector. The negative electrode current collector after the negative electrode current material is completely removed by rubbing the negative electrode current collector with a brush and the like is used.

The negative electrode current collector may be formed by casting lead (Pb) or a lead alloy, or may be formed by processing a sheet obtained by rolling a lead or lead alloy slab. Examples of the processing method include an expanding process and a punching process.

### (Other)

The negative electrode plate can be formed by filling a negative electrode current collector with a negative electrode paste, followed by curing and drying to produce an unformed negative electrode plate, and thereafter forming the unformed negative electrode plate. The negative electrode paste is produced by adding water and sulfuric acid to a lead powder, a carbon material, and as necessary, an organic expander and/or various additives, followed by kneading. The unformed negative electrode plate is preferably cured at a temperature higher than room temperature and a high humidity.

The negative electrode plate can be formed by charging an element including an unformed negative electrode plate in a state where the element is immersed in an electrolyte solution containing sulfuric acid in the container of the lead-acid battery. However, the formation may be performed before the assembly of the lead-acid battery or the element. Sponge-like metal lead is produced by the formation.

### (Positive Electrode Plate)

Examples of the positive electrode plate of the lead-acid battery include pasted type and tubular type positive electrode plates.

The pasted type positive electrode plate includes a positive electrode current collector and a positive electrode material. The positive electrode material is held by the positive electrode current collector. The positive electrode current collector may be formed in the same manner as in the negative electrode current collector, and can be formed by casting lead or a lead alloy or processing a lead or lead alloy sheet.

The tubular type positive electrode plate includes a plurality of porous tubes, a spine inserted into each of the tubes, a current collecting part for connecting the spines, a positive electrode material filled in each of the tubes into which the spine is inserted, and a joint for connecting the plurality of tubes. The spines and the current collecting part that connects the spines are collectively referred to as a positive electrode current collector.

The lead alloy used for the positive electrode current collector is preferably a Pb-Ca-based alloy, a Pb-Sb-based alloy, or a Pb-Ca-Sn-based alloy in terms of corrosion resistance and mechanical strength. The positive electrode current collector may have lead alloy layers having different compositions, and a plurality of alloy layers may be provided.

The positive electrode material contains a positive active material (lead dioxide or lead sulfate) that develops a capacity in an oxidation-reduction reaction. The positive electrode material may contain other additives as necessary.

The unformed pasted type positive electrode plate is obtained by filling a positive electrode current collector with a positive electrode paste, followed by curing and drying in the same manner as in the negative electrode plate. The positive electrode paste is prepared by kneading a lead powder, additives, water, and sulfuric acid.

The tubular type positive electrode plate is formed by filling each of a plurality of tubes into which a spine is inserted with a lead powder or a slurry lead powder, and causing a joint to connect the tubes.

The formed unformed positive electrode plate is formed. The formation produces lead dioxide. The formation of the positive electrode plate may be performed before the assembly of the lead-acid battery or the element.

### (Separator)

Usually, a separator is disposed between the negative electrode plate and the positive electrode plate. A nonwoven fabric and a microporous membrane and the like are used for the separator. The thickness and number of separators interposed between the negative electrode plate and the positive electrode plate may be selected depending on an interelectrode distance.

The nonwoven fabric is a mat in which fibers are entangled without being woven, and is mainly composed of the fibers. For example, 60 mass% or more of the separator is formed of fibers. As the fibers, glass fibers, polymer fibers (polyolefin fibers, acrylic fibers, polyester fibers such as polyethylene terephthalate fibers), and pulp fibers and the like can be used. Among these, glass fibers are preferable. The nonwoven fabric may contain components other than the fibers, such as an acid-resistant inorganic powder and a polymer as a binder, and the like.

Meanwhile, the microporous membrane is a porous sheet mainly composed of components other than the fiber component. For example, the microporous membrane is obtained by extruding a composition containing a pore-forming additive (a polymer powder and/or an oil and the like) into a sheet shape, and thereafter removing the pore-forming additive to form pores. The microporous membrane is preferably composed of a material having acid resistance, and is preferably composed mainly of a polymer component. As the polymer component, polyolefins such as polyethylene and polypropylene are preferable.

For example, the separator may be composed of only a nonwoven fabric, or may be composed of only a microporous membrane. The separator may be a laminate of a nonwoven fabric and a microporous membrane, a product obtained by bonding the same types or different types of materials, or a product obtained by engaging unevenness in the same types or different types of materials, as necessary.

### (Electrolyte Solution)

The electrolyte solution is an aqueous solution containing sulfuric acid, and may be gelled as necessary. The specific gravity at 20°C of the electrolyte solution in a fully charged lead-acid battery after formation is, for example, 1.10 g/cm³ or more and 1.35 g/cm³ or less, and preferably 1.20 g/cm³ or more and 1.35 g/cm³ or less.

Fig. 1 shows an external appearance of an example of a lead-acid battery according to an embodiment of the present invention.

The lead-acid battery 1 includes a container 12 that accommodates elements 11 and an electrolyte solution (not shown). The container 12 is partitioned into a plurality of cell chambers 14 by a partition 13. One element 11 is accommodated in each cell chamber 14. An opening part of the container 12 is sealed with a lid 15 including a negative electrode terminal 16 and a positive electrode terminal 17. The lid 15 includes a vent plug 18 provided in each cell chamber. At the time of water addition, the vent plug 18 is removed to replenish a water addition solution. The vent plug 18 may have a function for discharging a gas generated in the cell chamber 14 to the outside of the battery.

The element 11 is configured by laminating a plurality of negative electrode plates 2 and a plurality of positive electrode plates 3 with a separator 4 interposed therebetween. Here, the bag-like separator 4 that accommodates the negative electrode plate 2 is shown, but the form of the separator is not particularly limited. In the cell chamber 14 positioned on one end part of the container 12, a negative electrode strap 6 that connects lug portions 2a of the plurality of negative electrode plates 2 in parallel is connected to a feedthrough 8, and a positive electrode strap 5 that connects lug portions 3a of the plurality of positive electrode plates 3 in parallel is connected to a positive pole 7. The positive pole 7 is connected to the positive electrode terminal 17 disposed outside the lid 15. In the cell chamber 14 positioned on the other end part of the container 12, a negative pole 9 is connected to the negative electrode strap 6, and the feedthrough 8 is connected to the positive electrode strap 5. The negative pole 9 is connected to the negative electrode terminal 16 disposed outside the lid 15. Each feedthrough 8 passes through a through-hole provided in the partition 13, and connects the elements 11 of the cell chambers 14 adjacent to each other in series.

### [Examples]

Hereinafter, the present invention will be specifically described based on Examples and Comparative Examples, but the present invention is not limited to the following Examples.

### <<Lead-Acid Battery A1>>

### (1) Production of Negative Electrode Plate

A lead powder, water, dilute sulfuric acid, a carbon material, and an organic expander are mixed to obtain a negative electrode paste. The negative electrode paste is filled in a net part of an expanded grid made of a Pb-Ca-Sn-based alloy as a negative electrode current collector, cured, and dried to obtain an unformed negative electrode plate. The content of Ca in the Pb-Ca-Sn-based alloy is 0.09 mass%, and the content of Sn is 0.35 mass%.

As the carbon material, carbon black (average particle size D₅₀: 40 nm) and graphite (average particle size D₅₀: 110 µm) are used. As the organic expander, sodium lignin sulfonate is used. An adjusted additive amount is blended with the negative electrode paste such that the content of sodium lignin sulfonate contained in 100 mass% of a negative electrode material is set to 0.05 mass%.

### (2) Production of Positive Electrode Plate

A lead powder, water, and sulfuric acid are kneaded to produce a positive electrode paste. The positive electrode paste is filled in a net part of an expanded grid made of a Pb-Ca-Sn-based alloy, cured, and dried to obtain an unformed positive electrode plate.

### (3) Production of Lead-Acid Battery

The unformed negative electrode plate is accommodated in a bag-like separator formed of a polyethylene microporous membrane, and an element is composed of five unformed negative electrode plates and four unformed positive electrode plates per cell.

The element is inserted into a container made of polypropylene, and an electrolyte solution is injected into the container. Formation is performed in the container, and a flooded-type lead-acid battery A1 having a nominal voltage of 12 V and a nominal capacity of 30 Ah (5 hour rate) is assembled.

In the present lead-acid battery, the content of a first carbon material contained in the negative electrode material is set to 1.5 mass%, and the content of a second carbon material is set to 0.3 mass%. A powder resistance ratio R2/R1 is set to 15. The average aspect ratio of the first carbon material is set to 1.5. The ratio (= S2/S1) of a specific surface area S2 of the second carbon material to a specific surface area S1 of the first carbon material is set to 20. However, these values are determined as the content of each carbon material contained in the negative electrode material (100 mass%) when the negative electrode plate of the produced lead-acid battery is taken out and the carbon material contained in the negative electrode material is separated into the first carbon material and the second carbon material in the procedure described above. The powder resistances R1 and R2 of each carbon material, the powder resistance ratio R2/R1, the average aspect ratio of the first carbon material, and the specific surface area ratio S2/S1 are also determined from the lead-acid battery produced in the procedure described above.

### <<Lead-Acid Batteries A2 to A6>>

The powder resistance ratio R2/R1 is changed as shown in Table 1 by adjusting the specific surface area of each carbon material to be used, and the average aspect ratio of the first carbon material, and further adjusting the average particle size D₅₀ of each carbon material as necessary. Other than this, the negative electrode plate is produced in the same manner as in the lead-acid battery A1, and lead-acid batteries A2 to A6 are assembled in the same manner as in the lead-acid battery A1 except that the obtained negative electrode plate is used.

### <<Lead-Acid Battery B1>>

Only carbon black (average particle size D₅₀: 40 nm) is used as a carbon material. The content of Ca in a Pb-Ca-Sn-based alloy of a negative electrode current collector is set to 0.06 mass%, and the content of Sn is 1.00 mass%. Except for these, a negative electrode plate is formed in the same manner as in the lead-acid battery A1. A lead-acid battery B1 is assembled in the same manner as in the lead-acid battery A1 except that the obtained negative electrode plate is used.

### <<Lead-Acid Battery B2>>

Only carbon black (average particle size D₅₀: 40 nm) is used as a carbon material. Other than this, a negative electrode plate is formed in the same manner as in the lead-acid battery A1. A lead-acid battery B2 is assembled in the same manner as in the lead-acid battery A1 except that the obtained negative electrode plate is used.

### <<Lead-Acid Batteries C1 to C5, D1 to D5, E1 to E5, F1 to F5, G1 to G5, and H1 to H5>>

The contents of Ca and Sn in a Pb-Ca-Sn-based alloy of a negative electrode current collector are set to values shown in Table 1. Other than this, a negative electrode plate is formed in the same manner as in the lead-acid battery A2. Lead-acid batteries C1 to C5, D1 to D5, E1 to E5, F1 to F5, G1 to G5, and H1 to H5 are assembled in the same manner as in the lead-acid battery A1 except that the obtained negative electrode plate is used.

### <<Lead-Acid Batteries J1 to J6>>

The content of Ca in a Pb-Ca-Sn-based alloy of a negative electrode current collector is set to 0.06 mass%, and the content of Sn is set to 1.00 mass%. Other than this, a negative electrode plate is formed in the same manner as in each of the lead-acid batteries A1 to A6. Lead-acid batteries J1 to J6 are assembled in the same manner as in the lead-acid battery A1 except that the obtained negative electrode plate is used.

### <<Lead-Acid Battery K1>>

The content of Ca in a Pb-Ca-Sn-based alloy of a negative electrode current collector is set to 0.10 mass%, and the content of Sn is set to 1.00 mass%. Other than this, a negative electrode plate is formed in the same manner as in the lead-acid battery A5. A lead-acid battery K1 is assembled in the same manner as in the lead-acid battery A1 except that the obtained negative electrode plate is used.

### <<Lead-Acid Battery K2>>

The content of Ca in a Pb-Ca-Sn-based alloy of a negative electrode current collector is set to 0.10 mass%, and the content of Sn is set to 1.00 mass%. Other than this, a negative electrode plate is formed in the same manner as in the lead-acid battery A6. A lead-acid battery K2 is assembled in the same manner as in the lead-acid battery A1 except that the obtained negative electrode plate is used.

### [Evaluation 1: Corrosion Level]

First, with reference to SBA S 0101: 2014, the lead-acid battery is charged and discharged under idling stop conditions. Specifically, at 25°C, the following (a) to (c) are taken as one cycle, and repeated up to 30000 cycles. At this time, the charge-discharge of the lead-acid battery are stopped for 40 to 48 hours per 3600 cycles.
(a) Discharge 1: The lead-acid battery is discharged at a current value of 45 A for 59 seconds.
(b) Discharge 2: The lead-acid battery is discharged at a current value of 300 A for 1 second.
(c) Charge: The lead-acid battery is charged at a limiting current of 100 A and a voltage of 14.0 V for 60 seconds.

The corrosion amount of the lug portion of the negative electrode plate is evaluated based on the thickness of the lug portion. Specifically, first, the thickness (initial thickness) of the lug portion of the negative electrode plate before the battery is assembled is measured with a caliper. The battery after charge and discharge is disassembled to take out the negative electrode plate. The lug portion of the negative electrode plate is impregnated with a resin, cut such that a cross section in the thickness direction of the lug portion is exposed, and the cross section is polished. The cross section of the lug portion is observed with a microscope, and the thickness of the lug portion at a location where corrosion most proceeds is measured. The ratio (%) of a value obtained by subtracting the thickness of the lug portion at this time from the initial thickness (the decrease amount of the thickness) to the initial thickness is taken as a corrosion amount. Based on the corrosion amount, the corrosion level is evaluated according to the following criteria. When the thickness of the lug portion before assembly is not known, a lead-acid battery is obtained, and the thickness of the lug portion before assembly can be substituted by the thickness of the lug portion measured before test.
Corrosion level 1: Corrosion amount of less than 20%
Corrosion level 2: Corrosion amount of 20% or more and less than 40%
Corrosion level 3: Corrosion amount of 40% or more and less than 60%
Corrosion level 4: Corrosion amount of 60% or more and less than 80%
Corrosion level 5: Corrosion amount of 80% or more

### [Evaluation 2: Accumulation of Lead Sulfate]

The lead-acid battery is charged and discharged under the same conditions as those in Evaluation 1. For the negative electrode plate taken out from the lead-acid battery after charge-discharge, an accumulation amount of lead sulfate in a lower part of the negative electrode plate (a position of 20% from the bottom in the height of the negative electrode plate) is measured.

In the measurement of the accumulation amount of lead sulfate, first, the negative electrode plate is taken out from the lead-acid battery, and the negative electrode plate is washed with water and vacuum-dried (dried under a pressure lower than atmospheric pressure). The negative electrode material is collected from the lower part of the negative electrode plate and pulverized. Next, the content of a sulfur element in the pulverized negative electrode material (pulverized sample) is measured using a sulfur element analyzer (model S-200, manufactured by LECO). The measured content of the sulfur element is converted into an amount of lead sulfate, and a concentration of lead sulfate (mass%) per unit mass of the pulverized sample is determined to obtain an accumulation amount of lead sulfate. The accumulation amount of lead sulfate is expressed as a ratio (%) when the accumulation amount of lead sulfate in the negative electrode plate of the lead-acid battery B1 is taken as 100.

### [Evaluation 3: Low-Temperature High-Rate (HR) Performance]

The lead-acid battery is charged and discharged under the same conditions as those in Evaluation 1. The fully charged lead-acid battery is discharged at a discharge current of 2.6 A at -15°C until the terminal voltage reaches 1 V per unit cell, to determine a discharge time at this time. This discharge time is taken as an index of low temperature high rate discharge performance. The low temperature high rate discharge performance is expressed as a ratio (%) when the low temperature high rate discharge performance of the lead-acid battery B1 is taken as 100.

Table 1 shows the results of the lead-acid batteries A1 to A6, B1 to B2, C1 to C5, D1 to D5, E1 to E5, F1 to F5, G1 to G5, H1 to H5, J1 to J6, and K1 to K2.

**[Table 1]**

| Battery No. | First carbon material | | Content of second carbon material (mass%) | R2/R1 | S2/S1 | Pb alloy in negative electrode current collector | | Accumulation amount of lead sulfate (%) | Low-temperature HR discharge performance (%) | Corrosion level |
|---|---|---|---|---|---|---|---|---|---|---|
| | Content (mass%) | Average aspect ratio | | | | Ca (mass%) | Sn (mass%) | | | |
| B1 | 0 | - | 0.3 | - | | 0.06 | 1.00 | 100 | 100 | 5 |
| B2 | | | | | | 0.09 | 0.35 | 100 | 100 | 4 |
| A5 | 1.5 | 1.5 | 0.3 | 11 | 20 | 0.09 | 0.35 | 100 | 100 | 4 |
| A1 | | | | 15 | | | | 60 | 130 | 2 |
| A2 | | | | 57 | | | | 60 | 130 | 2 |
| A3 | | | | 103 | | | | 60 | 130 | 2 |
| A4 | | | | 152 | | | | 60 | 130 | 2 |
| A6 | | | | 169 | | | | 100 | 100 | 4 |
| C1 | 1.5 | 1.5 | 0.3 | 57 | 20 | 0.04 | 0.10 | 100 | 100 | 4 |
| C2 | | | | | | | 0.25 | 100 | 100 | 4 |
| C3 | | | | | | | 0.50 | 100 | 100 | 4 |
| C4 | | | | | | | 0.75 | 100 | 100 | 4 |
| C5 | | | | | | | 1.00 | 100 | 100 | 4 |
| D1 | 1.5 | 1.5 | 0.3 | 57 | 20 | 0.06 | 0.10 | 100 | 100 | 4 |
| D2 | | | | | | | 0.25 | 100 | 100 | 4 |
| D3 | | | | | | | 0.50 | 100 | 100 | 4 |
| D4 | | | | | | | 0.75 | 100 | 100 | 4 |
| D5 | | | | | | | 1.00 | 100 | 100 | 4 |
| E1 | 1.5 | 1.5 | 0.3 | 57 | 20 | 0.07 | 0.10 | 60 | 130 | 2 |
| E2 | | | | | | | 0.25 | 60 | 130 | 2 |
| E3 | | | | | | | 0.50 | 60 | 130 | 2 |
| E4 | | | | | | | 0.75 | 60 | 130 | 2 |
| E5 | | | | | | | 1.00 | 100 | 100 | 4 |
| F1 | 1.5 | 1.5 | 0.3 | 57 | 20 | 0.08 | 0.10 | 60 | 130 | 2 |
| F2 | | | | | | | 0.25 | 60 | 130 | 2 |
| F3 | | | | | | | 0.50 | 60 | 130 | 2 |
| F4 | | | | | | | 0.75 | 60 | 130 | 2 |
| F5 | | | | | | | 1.00 | 100 | 100 | 4 |
| G1 | 1.5 | 1.5 | 0.3 | 57 | 20 | 0.10 | 0.10 | 60 | 130 | 2 |
| G2 | | | | | | | 0.25 | 60 | 130 | 2 |
| G3 | | | | | | | 0.50 | 60 | 130 | 2 |
| G4 | | | | | | | 0.75 | 60 | 130 | 2 |
| G5 | | | | | | | 1.00 | 100 | 100 | 4 |
| H1 | 1.5 | 1.5 | 0.3 | 57 | 20 | 0.12 | 0.10 | 60 | 130 | 2 |
| H2 | | | | | | | 0.25 | 60 | 130 | 2 |
| H3 | | | | | | | 0.50 | 60 | 130 | 2 |
| H4 | | | | | | | 0.75 | 60 | 130 | 2 |
| H5 | | | | | | | 1.00 | 100 | 100 | 4 |
| J5 | 1.5 | 1.5 | 0.3 | 11 | 20 | 0.06 | 1.00 | 100 | 100 | 5 |
| J1 | | | | 15 | | | | 100 | 100 | 4 |
| J2 | | | | 57 | | | | 100 | 100 | 4 |
| J3 | | | | 103 | | | | 100 | 100 | 4 |
| J4 | | | | 152 | | | | 100 | 100 | 4 |
| J6 | | | | 169 | | | | 100 | 100 | 5 |
| K1 | 1.5 | 1.5 | 0.3 | 11 | 20 | 0.10 | 1.00 | 100 | 100 | 5 |
| K2 | | | | 169 | | | | 100 | 100 | 5 |

From the comparison between the lead-acid batteries B1 and B2 using only the second carbon material as the carbon material for the negative electrode plate, the corrosion level of the lug portion in the case of only the second carbon material is improved to 4 from 5 even if the composition of the Pb alloy of the negative electrode current collector is controlled. If the powder resistance ratio R2/R1 is less than 15 or more than 155 even when the first carbon material and the second carbon material are used, the corrosion level of the lug portion is 5, so that a corrosion suppressing effect is not obtained (K1, K2). If the powder resistance ratio R2/R1 is less than 15 or more than 155 even if the composition of the Pb alloy is controlled, the corrosion level of the lug portion is 4, so that the corrosion suppressing effect is little obtained (A5, A6).

When the content of Ca in the Pb alloy is 0.06 mass% or less or more than 0.15 mass%, or the content of Sn is less than 0.10 mass% or more than 0.80 mass% even if the powder resistance ratio R2/R1 is within a range of 15 to 155, the corrosion level is as high as 4 to 5 (C1 to C5, D1 to D5, E5, F5, G5, H5, J1 to J6).

In contrast to these results, when the powder resistance ratio R2/R1 is within a range of 15 to 155, and the composition of the Pb alloy is controlled, the corrosion level of the lug portion is considerably improved to 2 (A1 to A4, E1 to E4, F1 to F4, G1 to G4, H1 to H4). This is considered to be because the polarization characteristics of the negative electrode plate change, so that the potential of the lug portion during charge-discharge falls outside a specific potential at which corrosion proceeds.

When the powder resistance ratio R2/R1 is within a range of 15 to 155, and the composition of the Pb alloy is controlled, the accumulation amount of lead sulfate is also reduced, and the low temperature high rate discharge performance is also improved (A1 to A4, E1 to E4, F1 to F4, G1 to G4, H1 to H4). This is considered to be because the corrosion of the lug portion of the negative electrode can be suppressed by controlling the composition of the Pb alloy, and many conductive networks are easily formed in the negative electrode material by setting the powder resistance ratio R2/R1 to 15 to 155, which provides improved conductivity of the entire negative electrode plate. However, such an effect is not obtained when the content of Ca in the Pb alloy is 0.06 mass% or less even if the powder resistance ratio R2/R1 is within a range of 15 to 155. The effect is not obtained when the powder resistance ratio R2/R1 is less than 15 or more than 155 even if the composition of the Pb alloy is controlled.

### <<Lead-Acid Batteries L1 to L5>>

By adjusting the specific surface area of each carbon material to be used, a specific surface area ratio S2/S1 obtained in the above-described procedure is adjusted to values shown in Table 2. Other than this, a negative electrode plate is produced in the same manner as in the lead-acid battery A2, and lead-acid batteries L1 to L5 are assembled in the same manner as in the lead-acid battery A1 except that the obtained negative electrode plate is used.

The lead-acid batteries L1 to L5 are evaluated for the evaluations 1 to 3 in the same manner as in the lead-acid battery A1. The evaluation results are shown in Table 2. Table 2 also shows the results of the lead-acid battery A2.

**[Table 2]**

| Battery No. | First carbon material | | Content of second carbon material (mass%) | R2/R1 | S2/S1 | Pb alloy in negative electrode current collector | | Accumulation amount of lead sulfate (%) | Low-temperature HR discharge performance (%) | Corrosion level |
|---|---|---|---|---|---|---|---|---|---|---|
| | Content (mass%) | Average aspect ratio | | | | Ca (mass%) | Sn (mass%) | | | |
| L1 | 1.5 | 1.5 | 0.3 | 57 | 16 | 0.09 | 0.35 | 100 | 100 | 2 |
| A2 | | | | | 20 | | | 100 | 130 | 2 |
| L2 | | | | | 40 | | | 100 | 130 | 2 |
| L3 | | | | | 112 | | | 100 | 130 | 2 |
| L4 | | | | | 237 | | | 100 | 130 | 2 |
| L5 | | | | | 376 | | | 100 | 100 | 2 |

As shown in Table 2, the low temperature high rate discharge performance in a case where the specific surface area ratio S2/S1 is within a range of 20 or more and 240 or less is considerably improved (A2, L2 to L4) as compared to that in a case where the S2/S1 ratio is outside this range (L1, L5). This is considered to be because the shrink proofing effect of the organic expander is sufficiently exhibited. In these lead-acid batteries, the accumulation amount of lead sulfate is also maintained at the same level as that of the conventional lead-acid battery B1, and the corrosion level of the lug portion is also 2, which provides suppressed corrosion.

### <<Lead-Acid Batteries M1 to M5>>

By adjusting the average aspect ratio of the carbon material to be used, an average aspect ratio obtained in the above-described procedure is adjusted to values shown in Table 3. Other than this, a negative electrode plate is produced in the same manner as in the lead-acid battery L3, and lead-acid batteries M1 to M5 are assembled in the same manner as in the lead-acid battery A1 except that the obtained negative electrode plate is used.

The lead-acid batteries M1 to M5 are evaluated for the evaluations 1 to 3 in the same manner as in the lead-acid battery A1. The evaluation results are shown in Table 3. Table 3 also shows the results of the lead-acid battery L3.

**[Table 3]**

| Battery No. | First carbon material | | Content of second carbon material (mass%) | R2/R1 | S2/S1 | Pb alloy in negative electrode current collector | | Accumulation amount of lead sulfate (%) | Low-temperature HR discharge performance (%) | Average aspect ratio |
|---|---|---|---|---|---|---|---|---|---|---|
| | Content (mass%) | Average aspect ratio | | | | Ca (mass%) | Sn (mass%) | | | |
| M1 | 1.5 | 1 | 0.3 | 57 | 40 | 0.09 | 0.35 | 100 | 100 | 2 |
| L3 | | 1.5 | | | | | | 60 | 130 | 2 |
| M2 | | 5 | | | | | | 60 | 130 | 2 |
| M2 | | 16 | | | | | | 60 | 130 | 2 |
| M4 | | 30 | | | | | | 60 | 130 | 2 |
| M5 | | 35 | | | | | | 110 | 100 | 2 |

As shown in Table 3, the accumulation amount of lead sulfate in a case where the average aspect ratio of the first carbon material is within a range of 1.5 or more and 30 or less is considerably reduced as compared to that of a case where the average aspect ratio is outside this range (M1, M5), and the low temperature high rate discharge performance is considerably improved (L3, M2 to M4). The low temperature high rate discharge performance is considered to be improved because the dispersibility of the constituent components in the negative electrode material is high, whereby a conductive network is easily formed in the negative electrode material. It is considered that lead sulfate is easily reduced by forming the conductive network, and the accumulation amount is reduced. In these lead-acid batteries, the corrosion level of the lug portion is also 2, which provides suppressed corrosion.

### INDUSTRIAL APPLICABILITY

The lead-acid battery according to one aspect of the present invention is suitably utilized for batteries for vehicles such as automobiles including idling stop vehicles. The corrosion of the lug portion of the negative electrode plate is suppressed, whereby the lead-acid battery can also be applied to valve regulated and flooded-type lead-acid batteries. The lead-acid battery can also be utilized as power sources for starting automobiles and motorcycles and the like, and power sources for natural energy storage and industrial energy storage apparatuses and the like of electrical vehicles (forklift and the like) and the like.

### DESCRIPTION OF REFERENCE SIGNS

- 1: lead-acid battery
- 2: negative electrode plate
- 2a: lug portion of negative electrode plate
- 3: positive electrode plate
- 4: separator
- 5: positive electrode strap
- 6: negative electrode strap
- 7: positive pole
- 8: feedthrough
- 9: negative pole
- 11: element
- 12: container
- 13: partition
- 14: cell chamber
- 15: lid
- 16: negative electrode terminal
- 17: positive electrode terminal
- 18: vent plug

## Claims

1. A lead-acid battery comprising:
a negative electrode plate; and
a positive electrode plate,
wherein:
the negative electrode plate includes a negative electrode current collector and a negative electrode material containing a carbon material;
the carbon material contains a first carbon material having a particle size of 32 µm or more, and a second carbon material having a particle size of less than 32 µm;
a ratio of powder resistance R2 of the second carbon material to powder resistance R1 of the first carbon material: R2/R1 is 15 or more and 155 or less; and
the negative electrode current collector is composed of a Pb alloy containing more than 0.06 mass% and 0.15 mass% or less of Ca and 0.10 mass% or more and 0.80 mass% or less of Sn, wherein an average aspect ratio of the first carbon material is 1.5 or more and 30 or less, wherein the particle size, the powder resistance, and the average aspect ratio are measured according to the methods described in the description.

2. The lead-acid battery according to claim 1, wherein a ratio of a specific surface area S2 of the second carbon material to a specific surface area S1 of the first carbon material: S2/S1 is 20 or more wherein the specific surface area is measured according to the method described in the description.

3. The lead-acid battery according to claim 1 or 2, wherein a ratio of a specific surface area S2 of the second carbon material to a specific surface area S1 of the first carbon material: S2/S1 is 240 or less, wherein the specific surface area is measured according to the method described in the description.

4. The lead-acid battery according to any one of claims 1 to 3, wherein a content of the first carbon material in the negative electrode material is 0.03 mass% or more.

5. The lead-acid battery according to any one of claims 1 to 4, wherein a content of the first carbon material in the negative electrode material is 3.0 mass% or less.

6. The lead-acid battery according to any one of claims 1 to 5, wherein a content of the second carbon material in the negative electrode material is 0.03 mass% or more.

7. The lead-acid battery according to any one of claims 1 to 6, wherein a content of the second carbon material in the negative electrode material is 1.5 mass% or less.

8. The lead-acid battery according to any one of claims 1 to 7, wherein a total of a content of the first carbon material and a content of the second carbon material in the negative electrode material is 0.1 mass% or more and 3.5 mass% or less.

9. The lead-acid battery according to any one of claims 1 to 8, wherein a content of Ca in the Pb alloy is 0.065 mass% or more, or 0.070 mass% or more.

10. The lead-acid battery according to any one of claims 1 to 9, wherein a content of Ca in the Pb alloy is 0.12 mass% or less.

11. The lead-acid battery according to any one of claims 1 to 10, wherein a content of Sn in the Pb alloy is 0.75 mass% or less.

12. The lead-acid battery according to any one of claims 1 to 11, wherein the first carbon material contains at least graphite, and the second carbon material contains at least carbon black.

13. The lead-acid battery according to any one of claims 1 to 12, wherein the ratio: R2/R1 is 152 or less.

14. The lead-acid battery according to claim 2, wherein the negative electrode material further contains an organic expander.

## Patentansprüche

1. Bleibatterie, umfassend:
eine Negativelektrodenplatte; und
eine Positivelektrodenplatte,
wobei:
die Negativelektrodenplatte einen Negativelektrodenstromkollektor und ein ein Kohlenstoffmaterial enthaltendes Negativelektrodenmaterial umfasst;
das Kohlenstoffmaterial ein erstes Kohlenstoffmaterial mit einer Teilchengröße von 32 µm oder mehr und ein zweites Kohlenstoffmaterial mit einer Teilchengröße von weniger als 32 µm enthält;
ein Verhältnis des Pulverwiderstands R2 des zweiten Kohlenstoffmaterials zum Pulverwiderstand R1 des ersten Kohlenstoffmaterials, R2/R1, 15 oder mehr und 155 oder weniger beträgt; und
der Negativelektrodenstromkollektor gebildet ist aus einer Pb-Legierung, die mehr als 0,06 Masse- % und 0,15 Masse- % oder weniger Ca und 0,10 Masse- % oder mehr und 0,80 Masse- % oder weniger Sn enthält, wobei ein durchschnittliches Aspektverhältnis des ersten Kohlenstoffmaterials 1,5 oder mehr und 30 oder weniger beträgt, wobei die Teilchengröße, der Pulverwiderstand und das durchschnittliche Aspektverhältnis gemäß den in der Beschreibung beschriebenen Verfahren gemessen werden.

2. Bleibatterie nach Anspruch 1, wobei ein Verhältnis einer spezifischen Oberfläche S2 des zweiten Kohlenstoffmaterials zu einer spezifischen Oberfläche S1 des ersten Kohlenstoffmaterials, S2/S1, 20 oder mehr beträgt, wobei die spezifische Oberfläche gemäß dem in der Beschreibung beschriebenen Verfahren gemessen wird.

3. Bleibatterie nach Anspruch 1 oder 2, wobei ein Verhältnis einer spezifischen Oberfläche S2 des zweiten Kohlenstoffmaterials zu einer spezifischen Oberfläche S1 des ersten Kohlenstoffmaterials, S2/S1, 240 oder weniger beträgt, wobei die spezifische Oberfläche gemäß dem in der Beschreibung beschriebenen Verfahren gemessen wird.

4. Bleibatterie nach einem der Ansprüche 1 bis 3, wobei ein Gehalt an dem ersten Kohlenstoffmaterial in dem Negativelektrodenmaterial 0,03 Masse- % oder mehr beträgt.

5. Bleibatterie nach einem der Ansprüche 1 bis 4, wobei ein Gehalt an dem ersten Kohlenstoffmaterial in dem Negativelektrodenmaterial 3,0 Masse- % oder weniger beträgt.

6. Bleibatterie nach einem der Ansprüche 1 bis 5, wobei ein Gehalt an dem zweiten Kohlenstoffmaterial in dem Negativelektrodenmaterial 0,03 Masse- % oder mehr beträgt.

7. Bleibatterie nach einem der Ansprüche 1 bis 6, wobei ein Gehalt an dem zweiten Kohlenstoffmaterial in dem Negativelektrodenmaterial 1,5 Masse- % oder weniger beträgt.

8. Bleibatterie nach einem der Ansprüche 1 bis 7, wobei eine Summe eines Gehaltes an dem ersten Kohlenstoffmaterial und eines Gehaltes an dem zweiten Kohlenstoffmaterial in dem Negativelektrodenmaterial 0,1 Masse- % oder mehr und 3,5 Masse- % oder weniger beträgt.

9. Bleibatterie nach einem der Ansprüche 1 bis 8, wobei ein Gehalt an Ca in der Pb-Legierung 0,065 Masse- % oder mehr oder 0,070 Masse- % oder mehr beträgt.

10. Bleibatterie nach einem der Ansprüche 1 bis 9, wobei ein Gehalt an Ca in der Pb-Legierung 0,12 Masse- % oder weniger beträgt.

11. Bleibatterie nach einem der Ansprüche 1 bis 10, wobei ein Gehalt an Sn in der Pb-Legierung 0,75 Masse- % oder weniger beträgt.

12. Bleibatterie nach einem der Ansprüche 1 bis 11, wobei das erste Kohlenstoffmaterial zumindest Graphit enthält, und das zweite Kohlenstoffmaterial zumindest Ruß enthält.

13. Bleibatterie nach einem der Ansprüche 1 bis 12, wobei das Verhältnis R2/R1 152 oder weniger beträgt.

14. Bleibatterie nach Anspruch 2, wobei das Negativelektrodenmaterial weiterhin einen organischen Expander enthält.

## Revendications

1. Batterie plomb-acide comprenant :
une plaque d'électrode négative ; et
une plaque d'électrode positive,
dans laquelle :
la plaque d'électrode négative comprend un collecteur de courant d'électrode négative et un matériau d'électrode négative contenant un matériau de carbone ;
le matériau de carbone contient un premier matériau de carbone ayant une taille de particule de 32 µm ou plus, et un second matériau de carbone ayant une taille de particule de moins de 32 µm ;
un rapport de résistance de poudre R2 du second matériau de carbone à la résistance de poudre R1 du premier matériau de carbone : R2/R1 est de 15 ou plus et de 155 ou moins ; et
le collecteur de courant d'électrode négative est composé d'un alliage de Pb contenant plus de 0,06 % en masse et 0,15 % en masse ou moins de Ca et 0,10 % en masse ou plus et 0,80 % en masse ou moins de Sn, un rapport d'aspect moyen du premier matériau de carbone étant de 1,5 ou plus et de 30 ou moins, la taille de particule, la résistance de poudre et le rapport d'aspect moyen étant mesurés selon les procédés décrits dans la description.

2. Batterie plomb-acide selon la revendication 1, dans laquelle un rapport d'une surface spécifique S2 du second matériau de carbone à une surface spécifique S1 du premier matériau de carbone : S2/S1 est de 20 ou plus la surface spécifique étant mesurée selon la procédé décrit dans la description.

3. Batterie plomb-acide selon la revendication 1 ou 2, dans laquelle un rapport d'une surface spécifique S2 du second matériau de carbone à une surface spécifique du premier matériau de carbone : S2/S1 est de 240 ou moins, la surface spécifique étant mesurée selon le procédé décrit dans la description.

4. Batterie plomb-acide selon l'une quelconque des revendications 1 à 3, dans laquelle une teneur du premier matériau de carbone dans le matériau d'électrode négative est de 0,03 % en masse ou plus.

5. Batterie plomb-acide selon l'une quelconque des revendications 1 à 4, dans laquelle une teneur du premier matériau de carbone dans le matériau d'électrode négative est de 3,0 % en masse ou moins.

6. Batterie plomb-acide selon l'une quelconque des revendications 1 à 5, dans laquelle une teneur du second matériau de carbone dans le matériau d'électrode négative est de 0,03 % en masse ou plus.

7. Batterie plomb-acide selon l'une quelconque des revendications 1 à 6, dans laquelle une teneur du second matériau de carbone dans le matériau d'électrode négative est de 1,5 % en masse ou moins.

8. Batterie plomb-acide selon l'une quelconque des revendications 1 à 7, dans laquelle un total d'une teneur du premier matériau de carbone et d'une teneur du second matériau de carbone dans le matériau d'électrode négative est de 0,1 % en masse ou plus et de 3,5 % en masse ou moins.

9. Batterie plomb-acide selon l'une quelconque des revendications 1 à 8, dans laquelle une teneur de Ca dans l'alliage de Pb est de 0,065 % en masse ou plus ou de 0,070 % en masse ou plus.

10. Batterie plomb-acide selon l'une quelconque des revendications 1 à 9, dans laquelle une teneur de Ca dans l'alliage de Pb est de 0,12 % en masse ou moins.

11. Batterie plomb-acide selon l'une quelconque des revendications 1 à 10, dans laquelle une teneur de Sn dans l'alliage de Pb est de 0,75 % en masse ou moins.

12. Batterie plomb-acide selon l'une quelconque des revendications 1 à 11, dans laquelle le premier matériau de carbone contient au moins du graphite et le second matériau de carbone contient au moins du noir de charbon.

13. Batterie plomb-acide selon l'une quelconque des revendications 1 à 12, dans laquelle le rapport : R2/R1 est de 152 ou moins.

14. Batterie plomb-acide selon la revendication 2, dans laquelle le matériau d'électrode négative contient en outre un extenseur organique.
